# EUROPEAN PATENT SPECIFICATION

(11) **EP 3 937 422 B1**
(45) Date of publication and mention of the grant of the patent: **20.12.2023**
(21) Application number: 21178838.5
(22) Date of filing: 10.06.2021
(51) Int. Cl.: H04L 9/32, H04L 9/00, H04L 9/40

(54) **DEDICATED BLOCKCHAIN NODE DEVICES AND AUTOMATIC BLOCKCHAIN CONSTRUCTION METHODS AND APPARATUSES**
DEDIZIERTE BLOCKCHAIN-KNOTENVORRICHTUNGEN UND AUTOMATISCHE BLOCKCHAIN-KONSTRUKTIONSVERFAHREN UND -VORRICHTUNGEN
DISPOSITIFS DE NOEUD DE CHAÎNE DE BLOCS DÉDIÉS ET PROCÉDÉS ET APPAREILS DE CONSTRUCTION AUTOMATIQUE DE CHAÎNE DE BLOCS

(30) Priority: 08.07.2020 CN 202010653804
(43) Date of publication of application: 12.01.2022
(73) Proprietor: Alipay (Hangzhou) Information Technology Co., Ltd., Hangzhou, Zhejiang 310000 (CN)
(72) Inventor: WEI, Changzheng, Hangzhou, Zhejiang 310000 (CN); YAN, Ying, Hangzhou, Zhejiang 310000 (CN); ZHANG, Hui, Hangzhou, Zhejiang 310000 (CN)
(74) Representative: Goddar, Heinz J.

(56) References cited:
- CN-A- 108 737 106
- CN-B- 106 301 792
- US-A1- 2017 180 134
- US-A1- 2020 004 846
- US-A1- 2020 145 234

## Description

### TECHNICAL FIELD

The present disclosure relates to the field of terminal technologies, and in particular to blockchain integrated stations and automatic blockchain construction methods and apparatuses thereof.

### BACKGROUND

Blockchain technology (also referred to as distributed ledger technology) is a decentralized distributed database technology having many characteristics such as decentralization, openness, transparency, immutability and trustability and the like, and thus it is applicable to many application scenarios with high demands for data reliability.

### SUMMARY

In view of this, one or more embodiments of the present disclosure provide blockchain integrated stations and automatic blockchain construction methods and apparatuses thereof.

To achieve the above object, one or more embodiments of the present disclosure provide the following technical solution:

According to a first aspect of one or more embodiments of the present disclosure, provided is an automatic blockchain construction method of a blockchain integrated station, including:
initiating, by a first blockchain integrated station, a certificate authority service to generate a root certificate and broadcasting the root certificate in a network where the first blockchain integrated station is located;
receiving, by the first blockchain integrated station, an authentication application initiated by a second blockchain integrated station in the network, and issuing a leaf certificate to the second blockchain integrated station based on the certificate authority service after the authentication application passes verification;
determining, by the first blockchain integrated station, a blockchain node in a blockchain network, where the blockchain node includes the first blockchain integrated station and the second blockchain integrated station in the network with the leaf certificate issued by the certificate authority service.

According to a second aspect of one or more embodiments of the present disclosure, provided is an automatic blockchain construction method of a blockchain integrated station, including:
after accessing a network, initiating, by a second blockchain integrated station, an authentication application to a first blockchain integrated station in the network;
receiving, by the second blockchain integrated station, a leaf certificate issued by the first blockchain integrated station based on a certificate authority service, where the leaf certificate is generated by the first blockchain integrated station after determining that the authentication application passes verification;
broadcasting, by the second blockchain integrated station, the leaf certificate in the network to join in a blockchain network created by the first blockchain integrated station.

According to a third aspect of one or more embodiments of the present disclosure, provided is an automatic blockchain construction apparatus of a blockchain integrated station, including:
a service initiating unit, configured to enable a first blockchain integrated station to initiate a certificate authority service to generate a root certificate and broadcast the root certificate in a network where the first blockchain integrated station is located;
a certificate issuing unit, configured to enable the first blockchain integrated station to receive an authentication application initiated by a second blockchain integrated station in the network, and issue a leaf certificate to the second blockchain integrated station based on the certificate authority service after the authentication application passes verification;
a node determining unit, configured to enable the first blockchain integrated station to determine a blockchain node in a blockchain network, where the blockchain node includes the first blockchain integrated station and the second blockchain integrated station in the network with the leaf certificate issued by the certificate authority service.

According to a fourth aspect of one or more embodiments of the present disclosure, provided is an automatic blockchain construction apparatus of a blockchain integrated station, including:
a certificate applying unit, configured to enable a second blockchain integrated station to initiate an authentication application to a first blockchain integrated station in a network after accessing the network;
a certificate receiving unit, configured to enable the second blockchain integrated station to receive a leaf certificate issued by the first blockchain integrated station based on a certificate authority service, where the leaf certificate is generated by the first blockchain integrated station after determining that the authentication application passes verification;
a certificate broadcasting unit, configured to enable the second blockchain integrated station to broadcast the leaf certificate in the network to join in a blockchain network created by the first blockchain integrated station.

According to a fifth aspect of one or more embodiments of the present disclosure, provided is a blockchain integrated station, including:
a processor;
a memory for storing instructions executable by the processor;
where the processor performs the methods according to the first aspect or the second aspect by executing the executable instructions.

According to a sixth aspect of one or more embodiments of the present disclosure, provided is a computer readable storage medium having computer instructions stored thereon, where the instructions are executed by a processor to implement steps of the method as described in the first aspect or the second aspect.

### BRIEF DESCRIPTION OF THE DRAWINGS

FIG. 1 is a flowchart of an automatic blockchain construction method of a blockchain integrated station according to example embodiments of the present disclosure.
FIG. 2 is a schematic diagram of a scenario of automatic blockchain construction performed by a blockchain integrated station according to example embodiments of the present disclosure.
FIG. 3 is an interactive flowchart of automatic blockchain construction performed by a blockchain integrated station according to example embodiments of the present disclosure.
FIG. 4 is a flowchart of another automatic blockchain construction method of a blockchain integrated station according to example embodiments of the present disclosure.
FIG. 5 is a structural schematic diagram of a blockchain integrated station according to example embodiments of the present disclosure.
FIG. 6 is a block diagram of an automatic blockchain construction apparatus of a blockchain integrated station according to example embodiments of the present disclosure.
FIG. 7 is a block diagram of another automatic blockchain construction apparatus of a blockchain integrated station according to example embodiments of the present disclosure.

### DETAILED DESCRIPTION OF THE EMBODIMENTS

Example embodiments will be described in detail herein with the example embodiments thereof expressed in the drawings. When the following descriptions involve the drawings, same numbers in different drawings represent same or similar elements unless stated otherwise. The implementations described in the following example embodiments do not represent all implementations consistent with one or more embodiments of the present disclosure. On the contrary, they are merely embodiments of apparatuses and methods consistent with some aspects of one or more embodiments of the present disclosure described in detail in the appended claims.

It should be noted that the steps of corresponding method are not necessarily performed according to the sequence shown in the present disclosure in other embodiments. In some other embodiments, the steps included in the corresponding method can be more or less than described in the specification. Further, a single step described in the specification may be divided into several steps for descriptions in other embodiments while several steps described in the specification may be combined into a single step for descriptions in other embodiments.

In the early stage of development of the blockchain technology, users mostly add their own personal computer (PC) and laptop computer and the like into a blockchain network to become a blockchain node in the blockchain network. At this time, the stage can be called 1.0 architecture era of blockchain network, in which the behaviors of users to participate in the blockchain network are autonomous and the users also need to perform autonomous maintenance, for example, perform maintenance and configuration and so on for their devices (for example, PC) participating in the blockchain network. Along with continuous development of the blockchain technology, especially along with increasing needs of users for infrastructures with high performance and high availability, the blockchain network develops into 2.0 architecture era based on cloud service. In the 2.0 architecture era, Blockchain-as-a-Service (BaaS) provides fast and convenient solutions for fast blockchain deployment and technical implementation and supports a large number of blockchain service projects. Generally, BaaS is built on infrastructures such as public cloud or private cloud, which introduces heavy dependence on infrastructure as well as providing strong deployment capability. However, because blockchain is a typical distributed computing technology, not all nodes can be migrated to clouds but privatization deployment is needed. The additional technical migration and maintenance costs brought by the privatization deployment cause inconsistent technical interfaces and high deployment and maintenance costs during an actual implementation. Therefore, to satisfy the needs of users for privatization and security and the like of the blockchain network, it is necessary to perform further architecture upgrade to the blockchain network, thereby realizing 3.0 architecture era based on blockchain integrated station.

Software and hardware integration can be realized for the blockchain integrated station. When providing a blockchain integrated station, a provider will not only provide hardware devices of the blockchain integrated station to users but also provide software configurations for realizing deep optimizations of the hardware devices integrated into the blockchain integrated station, thereby realizing the above software-hardware integration.

Hardware optimization can be realized for the blockchain integrated station. For example, a dedicated smart contract processing chip can be deployed on the blockchain integrated station. For example, the smart contract processing chip can be Field Programmable Gate Array (FPGA) chip, or another type of chip to increase the processing efficiency for a smart contract. A hardware root-of-trust key can be deployed on the smart contract processing chip, for example, the hardware root-of-trust key can be pre-programmed by the provider into the smart contract processing chip and the provider can also know a public key corresponding to the hardware root-of-trust key (for example, the key is disclosed). Therefore, the smart contract processing chip can send negotiation information to the provider and sign the negotiation information by using the hardware root-of-trust key, so that the provider can verify the signature based on the corresponding public key; and, after successful signature verification, it is ensured that the smart contract processing chip and the provider obtain the same key through negotiation based on the above negotiation information. The negotiated key can include a file deployment key, and thus the provider can encrypt and transmit a binary image file needed by the blockchain node to the smart contract processing chip based on the file deployment key, and the smart contract processing chip can decrypt and deploy the binary image file based on the file deployment key. The negotiated key can include a service secret deployment key, and thus the provider can encrypt and transmit a node private key of the blockchain node, a service root key of the blockchain node, etc., to the smart contract processing chip based on the service secret deployment key, and the smart contract processing chip can obtain and deploy the node private key and the service root key and the like based on the service secret deployment key to satisfy the privacy transaction needs in a blockchain scenario. For example, the node private key corresponds to a node public key, and thus a client device can perform encrypted transmission for a blockchain transaction by using the node public key, and the blockchain node can perform decryption by using the node private key. The service root key is a symmetric key which can be used to perform encrypted storage for service data such as contract codes and value of contract status and the like. The service root key may not be directly used, and the smart contract processing chip can perform encryption and decryption through a derivation key of the service root key to reduce the security risk of the service root key. Through reliable management for the node private key and the service root key (or its derivation key), data will be always in encrypted state unless processed by the smart contract processing chip. Therefore, the smart contract processing chip actually forms a Trusted Execution Environment (TEE) of hardware on the blockchain integrated station, so as to ensure the data requiring privacy protection such as transactions, contract codes, and contract statuses will not be leaked.

For another example, an intelligent network card can be deployed on the blockchain integrated station. In addition to realizing a traditional network card function, the intelligent network card also can replace or assist a CPU of the blockchain integrated station to perform partial functions so as to offload computation of the CPU. Especially, the operations with intensive network I/O can be transferred from CPU to the intelligent network card to perform, so that the CPU can process more computation-intensive operations, for example, transaction processing, and storage processing and the like. Compared with other components (for example, CPU) on the blockchain integrated station, the intelligent network card is closer to the network regardless of physical level or logical level, so the intelligent network card can always fetch data transmitted in the network preferentially. Therefore, with no storage access or a small amount of storage access is involved, the intelligent network card can process these data with a relatively higher processing efficiency and a relatively smaller delay, and a relatively larger throughput, so as to achieve a higher performance benefit with a lower cost. For example, in consensus algorithm, there is almost no need to access storage except in the cases of change of network status, addition and deletion of node, change of consensus configuration and the like. Therefore, the consensus operation can be completed by the intelligent network card and only need to inform the CPU of a consensus result. Therefore, the CPU is not required to directly participate in the consensus process, thereby significantly improving the consensus efficiency. Similarly, the same effect can be achieved in forwarding transactions by the intelligent network card and achieving block synchronization by the intelligent network card on a newly-added blockchain node and the like and will not be repeated herein. Furthermore, after receiving transactions, the intelligent network card can identify or filter out a replay transaction by comparing the received transaction with historical transactions, for example, comparing data fields of sender information of transaction, destination address, time stamp, and hash value and the like. The intelligent network card can also perform content analysis for those received transactions, so as to filter out illegal transactions or predefined undesired transactions and the like as a supplementation to layer-2 or layer-3 packet filtering implemented by a switch.

For another example, a cryptographic acceleration card which is also called a high-speed cryptographic card can be deployed on the blockchain integrated station. The cryptographic acceleration card can realize total encrypted memory, defend against side-channel attacks by hardware reinforcement, and also realize physical protection against approaches such as probe, laser and the like, having very high security. For example, the cryptographic acceleration card used on the blockchain integrated station can have level-2 qualification from the State Cryptography Administration, level-3 qualification from the State Cryptography Administration and the like. When the cryptographic acceleration card is deployed, the hardware roof-of-trust key as described above can be maintained in the cryptographic acceleration card, and the cryptographic acceleration card can perform signature operation based on the hardware roof-of-trust key and replace or assist the smart contract processing chip to complete the operations such as the key negotiation as described above. Similarly, the cryptographic acceleration card can be used to maintain a public key so that the cryptographic acceleration card can realize signature verification operation based on the maintained public key. In short, at least part of operations relating to key management, encryption and decryption, and signature verification and the like on the blockchain integrated station can be handed over to the cryptographic acceleration card, so that very high security can be realized and task offloading can be realized for the CPU of the blockchain integrated station or the above smart contract processing chip, thereby improving the processing efficiency.

Software optimization can be realized for the blockchain integrated station. For example, a certificate authority service can be built in the blockchain integrated station to realize automatic certificate issuing, node identity authentication, automatic blockchain construction, and automatic adding of blockchain node, thereby realizing the plug and play of the blockchain integrated station. In this case, a user can realize fast deployment of the blockchain integrated station. In addition to quickly establishing a private blockchain network among a plurality of blockchain integrated stations, the blockchain integrated station can integrate a standardized on-cloud service interface to enable the blockchain integrated station to automatically connect to on-cloud service, thereby realizing hybrid deployment between the blockchain integrated station and the cloud-deployed blockchain node to construct a hybrid blockchain network. The blockchain integrated station can also integrate a standardized cross-chain service interface to enable the blockchain integrated station to realize cross-chain services based on a standardized cross-chain protocol or standardized cross-chain service, thereby greatly expanding the application scenarios of the blockchain integrated station, and satisfying the cross-chain needs of users. For example, cross-chain data interaction between different blockchain networks is achieved, and for another example, cross-chain data interaction between the blockchain network and an off-chain computing node and the like is achieved (for example, the off-chain computing node shares computation task for the blockchain node and the like).

Based on a unified software logic adopted on each blockchain integrated station, the blockchain integrated station in the present disclosure can realize a process of automatically establishing a blockchain network, which will be described in combination with the accompanying drawings.

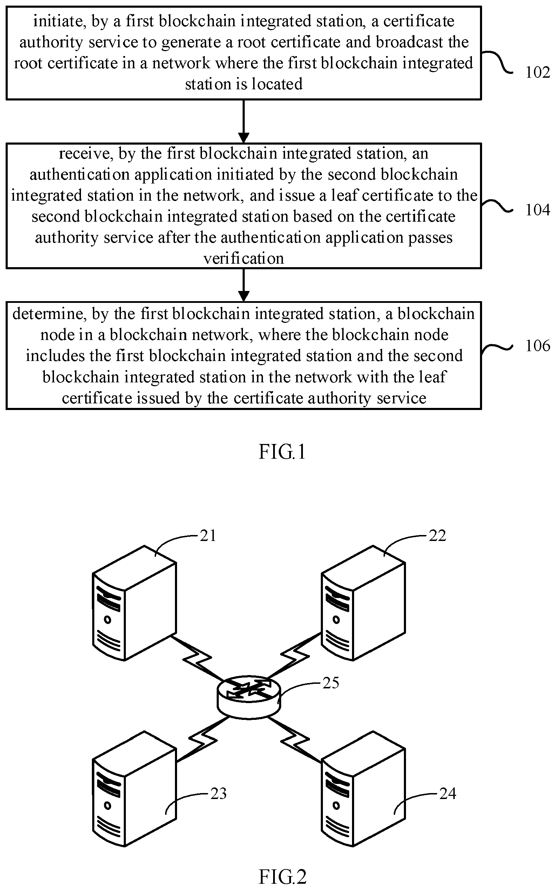

FIG. 1 is a flowchart of an automatic blockchain construction method of a blockchain integrated station according to example embodiments of the present disclosure. As shown in FIG. 1, the method includes the following steps.

At step 102, a first blockchain integrated station initiates a certificate authority service to generate a root certificate and broadcasts the root certificate in a network where the first blockchain integrated station is located.

The blockchain integrated station can include a certificate authority (CA) service, which is equivalent to configuring the blockchain integrated station as a CA center in the network, so as to realize autonomous certificate issuing. Each blockchain integrated station can be in-built with a CA service. But, in general, only some of the blockchain integrated stations in the network may initiate the CA service, and typically, there can be only one blockchain integrated station initiates the CA service and other blockchain integrated stations need to apply for a certificate from the blockchain integrated station. Of course, there can be differences between different blockchain integrated stations, for example, the CA service can be built in only some of the blockchain integrated stations in the network. In this case, only one or more of these blockchain integrated stations can initiate the CA service and assist in issuing the certificate to other blockchain integrated stations without built-in CA service.

The above first blockchain integrated station is in-built with the CA service and initiates the CA service. The first blockchain integrated station can be any of the blockchain integrated stations with the built-in CA service rather than a particular blockchain integrated station. For convenience of distinguishing, the blockchain integrated station did not initiate the CA service below is referred to as a second blockchain integrated station. The second blockchain integrated station can be in-built with the CA service but does not initiate the CA service, or may be not in-built with the CA service.

The blockchain integrated stations already accessing the network can perform election to determine one or more primary nodes. Thus, the first blockchain integrated station can initiate its own CA service in a case of being elected as a primary node. An election rule is not limited in the present disclosure, for example, the first n blockchain integrated stations accessing the network are determined as primary nodes according to a network access sequence, for another example, n blockchain integrated stations are determined as primary nodes in a descending or an ascending order according to a size of IP addresses, where n is an integer. Of course, the election process is only to determine which blockchain integrated station should initiate the CA service and the process is not necessary. For example, after accessing the network, each blockchain integrated station can perform a node discovery operation firstly. If a blockchain integrated station determines that there are no other blockchain integrated stations accessing the network, the blockchain integrated station can initiate the CA service. If the blockchain integrated station determines that there are other blockchain integrated stations accessing the network, the blockchain integrated station does not initiate the CA service.

After initiating the CA service, the first blockchain integrated station can firstly generate a root certificate for itself based on the CA service, and broadcast the root certificate in the network to indicate to the second blockchain integrated stations accessing the network that the first blockchain integrated station has already initiated the CA service. In this case, the first blockchain integrated station can instruct the second blockchain integrated station to initiate an authentication application to the first blockchain integrated station, thereby issuing a certificate to the second blockchain integrated station.

When issuing a certificate, the CA service needs to use an identity key of the first blockchain integrated station. Assuming that the first blockchain integrated station creates a first identity key, the first identity key specifically includes a first identity private key and a corresponding first identity public key. Further, the first blockchain integrated station provides the first identity private key to the CA service so that the CA service can sign the first identity public key and description information of the first blockchain integrated station by using the first identity private key to generate the above root certificate. Because the root certificate is a digital certificate generated by signing its own public key with its own private key, the digital certificate corresponding to the first blockchain integrated station is the root certificate or a self-signed certificate.

At step 104, the first blockchain integrated station receives an authentication application initiated by the second blockchain integrated station in the network, and issues a leaf certificate to the second blockchain integrated station based on the certificate authority service after the authentication application passes verification.

For the above first identity private key, the first blockchain integrated station needs to maintain the first identity private key properly but can disclose the first identity public key at discretion. Of course, the first identity public key is actually included in the root certificate. Therefore, after receiving the root certificate, the second blockchain integrated station can obtain the first identity public key from the root certificate, and perform signature verification for the root certificate according to the first identity public key. If the signature verification is successful, the second blockchain integrated station can determine that the root certificate is valid, and further determine the first blockchain integrated station initiated the CA service. Thus, the second blockchain integrated station can initiate the authentication application to the first blockchain integrated station so that the CA service initiated by the first blockchain integrated station issues the digital certificate to the second blockchain integrated station.

Similar to the first blockchain integrated station, the second blockchain integrated station also creates its own identity key. Assuming that the second blockchain integrated station creates a second identity key, the second identity key specifically includes a second identity private key and a second identity public key. The authentication application created by the second blockchain integrated station can include the second identity public key and description information of the second blockchain integrated station. The second blockchain integrated station needs to maintain the second identity private key properly. Correspondingly, after the first blockchain integrated station provides the received authentication application to the CA service, the CA service can sign the second identity public key and the description information of the second blockchain integrated station and the description information of the first blockchain integrated station by using the above first identity private key to generate a digital certificate corresponding to the second blockchain integrated station.

Because the digital certificate corresponding to the first blockchain integrated station is signed by its own first identity private key, the first identity public key can be obtained directly from the digital certificate to complete the signature verification. The digital certificate corresponding to the second blockchain integrated station is also signed by the first identity private key of the fist blockchain integrated station, but the public key included in the digital certificate is the second identity public key corresponding to the second blockchain integrated station. Thus, the root certificate needs to be obtained according to the description information of the first blockchain integrated station included in the digital certificate and the signature included in the digital certificate corresponding to the second blockchain integrated station needs to be verified according to the first identity public key included in the root certificate. Therefore, a chain type relationship, i.e., a certificate chain, is formed between the digital certificate corresponding to the first blockchain integrated station and the digital certificate corresponding to the second blockchain integrated station. Because the digital certificate corresponding to the first blockchain integrated station is located at the position of the "root", its digital certificate is referred to as a root certificate. Because the digital certificate corresponding to the second blockchain integrated station is located at the position of "leave", its digital certificate is referred to as a leaf certificate.

At step 106, the first blockchain integrated station determines a blockchain node in a blockchain network, where the blockchain node includes the first blockchain integrated station and the second blockchain integrated station in the network with the leaf certificate issued by the certificate authority service.

The digital certificate issued by the CA service can be used to indicate: the blockchain integrated station corresponding to the digital certificate already passes identity authentication of the CA service. Thus, when verification is performed for the digital certificate provided by a particular blockchain integrated station, the blockchain integrated station can be determined as a blockchain node in the blockchain network after the verification is successful. When all blockchain integrated stations in the network adopt the above verification logic, these blockchain integrated station can complete automatic blockchain construction, i.e., can construct the blockchain network automatically.

The first blockchain integrated station can generate the root certificate by initiating the CA service. The first blockchain integrated station can determine itself as a blockchain node in the blockchain network based on the root certificate. Of course, the first blockchain integrated station can perform signature verification for the root certificate, and determine itself as a blockchain node after the verification is successful. Similarly, the first blockchain integrated station can receive a to-be-verified leaf certificate from the second blockchain integrated station, and perform signature verification for the to-be-verified leaf certificate according to the first identity public key included in the root certificate. In this way, the first blockchain integrated station can determine the to-be-verified leaf certificate is issued by the CA service initiated by the first blockchain integrated station in a case of successful verification, and determine the second blockchain integrated station corresponding to the to-be-verified leaf certificate as a blockchain node in the blockchain network. So far, the first blockchain integrated station automatically determines itself and the second blockchain integrated station other than itself as blockchain nodes so as to automatically construct the blockchain network from the viewpoint of the first blockchain integrated station.

Similarly, the blockchain node can be determined from the view point of the second blockchain integrated station, so as to automatically construct the blockchain network. For example, the second blockchain integrated station can perform signature verification for the received root certificate, and can also perform signature verification for its own leaf certificate according to the first identity public key included in the root certificate, and can also perform signature verification for the leaf certificate corresponding to another second blockchain integrated station according to the first identity public key included in the root certificate. In short, the second blockchain integrated station can perform signature verification for the digital certificates corresponding to all blockchain integrated stations in the network, and determine blockchain integrated stations corresponding to the successfully-verified digital certificates as blockchain nodes.

Each blockchain integrated station in the network can realize data interaction with these blockchain nodes according to its identification results for the blockchain nodes, for example, receive or send blockchain transactions, complete consensus operations and the like. Each blockchain integrated station can maintain a node information list respectively and record information of the blockchain integrated station determined as a blockchain node into the node information list. The information of the blockchain integrated station recorded in the node information list can include at least one of IP address of the blockchain integrated station, identity public key of the blockchain integrated station or the like, which is not limited herein.

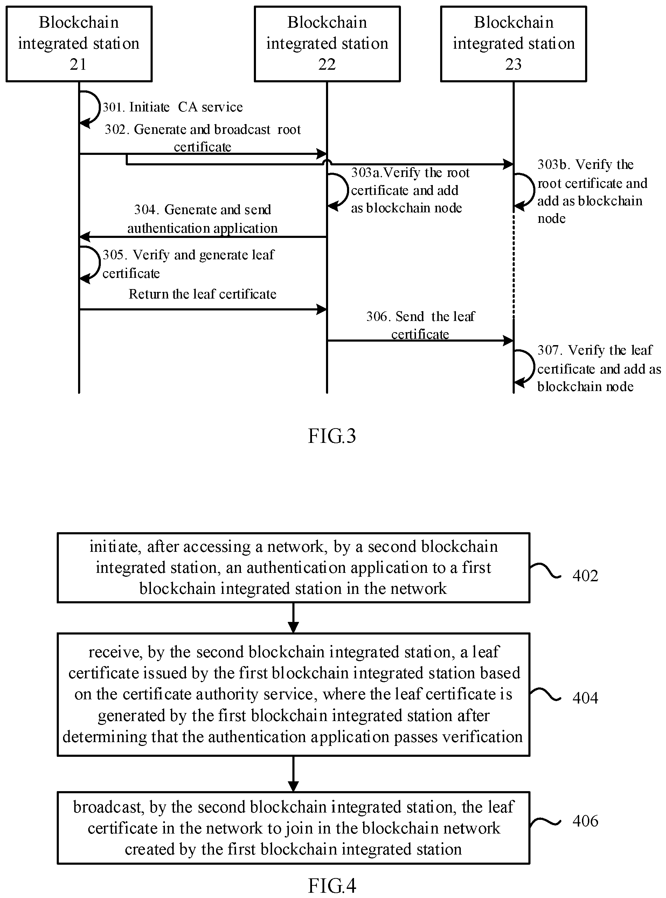

For example, FIG. 2 shows a scenario in which a blockchain integrated station performs automatic blockchain construction. In FIG. 2, there are a total of four blockchain integrated stations, i.e., a blockchain integrated station 21, a blockchain integrated station 22, a blockchain integrated station 23, and a blockchain integrated station 24. Of course, the quantity of the blockchain integrated stations is not limited in the present disclosure. The blockchain integrated stations 21-24 are all connected to a switch 25, so that the blockchain integrated stations 21-24 actually access a same local area network and realize an interaction process shown in FIG. 3.

At step 301, the blockchain integrated station 21 initiates the CA service.

Assuming that the blockchain integrated station 21 is the first to accesses the local area network, and if the blockchain integrated station firstly accessing the local area network is determined as a primary node according to a predetermined election rule, the blockchain integrated station 21 can determine itself as a primary node and initiate the CA service. Of course, another election rule can be adopted, which may result in change of the election result of the primary node. For example, the election rule can also determine a blockchain integrated station with the largest IP address as a primary node and the like. In a word, the blockchain integrated station determined as the primary node initiates the CA service, and other blockchain integrated stations do not initiate the CA service.

At step 302, the blockchain integrated station 21 generates and broadcasts the root certificate.

The blockchain integrated station 21 can generate an identity key, for example, a first identity key, where the first identity key can include a first identity private key and a first identity public key. Then, the blockchain integrated station 21 generates the root certificate through the CA service. Specifically, the CA service can sign the first identity public key and the description information of the blockchain integrated station 21 by using the first identity private key to generate a digital certificate corresponding to the blockchain integrated station 21, i.e., the above root certificate.

At step 303a, the blockchain integrated station 22 verifies the root certificate and adds the blockchain integrated station 21 as a blockchain node after the verification is passed.

After receiving the root certificate broadcast by the blockchain integrated station 21, the blockchain integrated station 22 can perform signature verification by using the first identity public key included in the root certificate. In a case of successful signature verification, the blockchain integrated station 22 can determine the root certificate passes verification and determine two conclusions: it is determined that the blockchain integrated station 21 is a blockchain node and the blockchain integrated station 21 initiates the CA service. The blockchain integrated station 22 can maintain a node information list which is used to record information of a blockchain node determined by the blockchain integrated station 22, for example, a public key and an IP address and the like of the blockchain node. Therefore, after determining the blockchain integrated station 21 is a blockchain node, the blockchain integrated station 22 can record the information of the blockchain integrated station 21 into the node information list maintained by itself.

At step 303b, the blockchain integrated station 23 verifies the root certificate and adds the blockchain integrated station 21 as a blockchain node after the verification is passed.

The processing procedure of the blockchain integrated station 23 is similar to that of the blockchain integrated station 22, therefore reference can made to the descriptions of step 303A. Actually, the blockchain integrated station 24 and other blockchain integrated stations in the network all adopt the similar processing logic and thus descriptions are omitted for simplicity.

At step 304, the blockchain integrated station 22 generates an authentication application and sends the authentication application to the blockchain integrated station 21.

After determining the blockchain integrated station 21 initiates the CA service, the blockchain integrated station 22 can generate and send the authentication application to request the CA service on the blockchain integrated station 21 to issue a digital certificate to the blockchain integrated station 22.

Similar to the blockchain integrated station 21, the blockchain integrated station 22 can generate an identity key, for example, the second identity key, where the second identity key includes the second identity private key and the second identity public key. The authentication application generated by the blockchain integrated station 22 can include the second identity public key and the description information of the blockchain integrated station 22. The description information of the blockchain integrated station includes ID information, product serial number, IP address, MAC address and the like. Thus, the description information is not limited herein as long as it can prove the identity of the blockchain integrated station.

At step 305, the blockchain integrated station 21 verifies and generates a leaf certificate and returns the leaf certificate to the blockchain integrated station 22.

After receiving the authentication application from the blockchain integrated station 22, the blockchain integrated station 21 can verify the description information of the blockchain integrated station 22 included in the authentication application through the CA service, and generate a digital certificate for the blockchain integrated station 22 after the verification is successful. Specifically, the CA service can sign the second identity public key and the description information of the blockchain integrated station 22 and the description information of the blockchain integrated station 21 by using the first identity private key to generate a digital certificate corresponding to the blockchain integrated station 22, i.e., the above leaf certificate. Herein, the description information of the blockchain integrated station 21 adopted for signature may be inconsistent with the description information of the blockchain integrated station 22, for example, they may include different types of description information, which depends on a rule set by the CA service. Likewise, the description information of the blockchain integrated station 22 included in the authentication application may be inconsistent with the description information of the blockchain integrated station 22 adopted for signature, for example, the description information adopted for signature may be only part of the description information included in the authentication application, and especially may exclude part of description information that is not suitable for disclosure (for example, relating to privacy), for another example, the description information adopted for signature may be a hash value of the description formation included in the authentication application. Thus, the leaf certificate can fully correspond to the description information included in the authentication application, and be prevented from disclosing the description information unsuitable for disclosure.

Similar to the blockchain integrated station 22, the blockchain integrated station 23, the blockchain integrated station 24, and other blockchain integrated stations in the network all can request the CA service on the blockchain integrated station 21 to issue a leaf certificate through steps 304-305 or similar process, which will not be repeated herein.

At step 306, the blockchain integrated station 22 sends the leaf certificate to the blockchain integrated station 23 for verification.

At step 307, the blockchain integrated station 23 verifies the leaf certificate and adds the blockchain integrated station 22 as a blockchain node after the verification is passed.

After receiving the leaf certificate from the blockchain integrated station 22, the blockchain integrated station 23 can perform signature verification for the received leaf certificate by using the first identity public key obtained from the root certificate at step 303b. If the verification is successful, it indicates that the leaf certificate is indeed issued by the CA service on the blockchain integrated station 21. In this case, based on the endorsement of the CA service for the blockchain integrated station 22, the blockchain integrated station 23 can determine the blockchain integrated station 22 is a blockchain node, and add the blockchain integrated station 22 to the node information list maintained by itself. Similarly, the blockchain integrated station 22 can ensure its own information is added to the node information lists maintained respectively by the blockchain integrated station 24 and other blockchain integrated stations in the network, that is, the blockchain integrated station 22 is determined as a blockchain node by other blockchain integrated stations. Because the leaf certificate is issued by the CA service on the blockchain integrated station 21, the blockchain integrated station 21 does not need to verify the leaf certificate of the blockchain integrated station 22 like the blockchain integrated station 23, etc., but determines the blockchain integrated station 22 as a blockchain node as soon as the leaf certificate is issued, and adds the information of the blockchain integrated station 22 to the node information list maintained by the blockchain integrated station 21. Of course, to guarantee the logic consistency of various blockchain integrated stations, the blockchain integrated station 21 can also receive the leaf certificate from the blockchain integrated station 22 and determine whether the blockchain integrated station 22 is a blockchain node by verifying the leaf certificate in the process similar to steps 306-307.

As can be seen, the blockchain integrated stations 21-24 can automatically complete certificate issuing and node authentication through the above steps shown in FIG. 3, so that each blockchain integrated station determines and records the identified blockchain node respectively. Thus, a blockchain network is formed between these identified blockchain nodes, that is, the blockchain integrated stations 21-24 complete automatic blockchain construction.

FIG. 4 is a flowchart of another automatic blockchain construction method of a blockchain integrated station according to example embodiments of the present disclosure. As shown in FIG. 4, the method may include the following steps.

At step 402, after accessing a network, a second blockchain integrated station initiates an authentication application to a first blockchain integrated station in the network.

As mentioned above, the first blockchain integrated station is in-built with a CA service and initiates the CA service. Each blockchain integrated station can be in-built with a CA service. But, in general, only some of the blockchain integrated stations in the network will initiate the CA service, and typically, there can be only one blockchain integrated station initiates the CA service and other blockchain integrated stations need to apply for a certificate from the blockchain integrated station. Of course, there can be differences between different blockchain integrated stations, for example, only some of the blockchain integrated stations are in-built with the CA service in the network. In this case, one or more of these blockchain integrated stations can initiate the CA service and assist in issuing the certificate to other blockchain integrated stations without built-in CA service.

The blockchain integrated stations already accessing the network can perform election to determine one or more primary nodes. Thus, the first blockchain integrated station can initiate its own CA service in a case of being elected as a primary node. Correspondingly, the second blockchain integrated station can initiate the authentication application to the first blockchain integrated station in a case of determining the first blockchain integrated station is elected as a primary node.

The first blockchain integrated station can generate and broadcast a root certificate after initiating the CA service. When issuing a certificate, the CA service needs to use an identity key of the first blockchain integrated station. Assuming that the first blockchain integrated station creates a first identity key which specifically includes a first identity private key and a corresponding first identity public key. Further, the first blockchain integrated station provides the first identity private key to the CA service so that the CA service signs the first identity public key and the description information of the first blockchain integrated station by using the first identity private key, so as to generate the above root certificate. The second blockchain integrated station can obtain the root certificate of the first blockchain integrated station and determine the first blockchain integrated station as a primary node in a case of determining the root certificate passes verification.

At step 404, the second blockchain integrated station receives a leaf certificate issued by the first blockchain integrated station based on the certificate authority service, where the leaf certificate is generated by the first blockchain integrated station after determining that the authentication application passes verification.

Similar to the first blockchain integrated station, the second blockchain integrated station also creates its own identity key. Assuming that the second blockchain integrated station creates a second identity key, the second identity key specifically includes a second identity private key and a second identity public key. The authentication application created by the second blockchain integrated station can include the second identity public key and description information of the second blockchain integrated station. The second blockchain integrated station needs to maintain the second identity private key properly. Correspondingly, after the first blockchain integrated station provides the received authentication application to the CA service, the CA service can sign the second identity public key and the description information of the second blockchain integrated station and the description information of the first blockchain integrated station by using the above first identity private key to generate a digital certificate corresponding to the second blockchain integrated station, i.e., the above leaf certificate.

At step 406, the second blockchain integrated station broadcasts the leaf certificate in the network to join in the blockchain network created by the first blockchain integrated station.

By broadcasting the leaf certificate of the second blockchain integrated station in the network, other blockchain integrated stations in the network can receive the leaf certificate of the second blockchain integrated station, and perform verification for the leaf certificate through the root certificate of the first blockchain integrated station. Specifically, the first identity public key included in the root certificate is obtained and signature verification is performed for the leaf certificate based on the first identity public key. If the leaf certificate of the second blockchain integrated station is successfully verified by other blockchain integrated stations, the second blockchain integrated station will be determined as a blockchain node by these blockchain integrated stations, which is equivalent to that the second blockchain integrated station joins in the corresponding blockchain network.

Similarly, the second blockchain integrated station can verify a certificate of any blockchain integrated station based on the above root certificate, and determine the any blockchain integrated station as a blockchain node in the blockchain network after the verification is successful. Any blockchain integrated station herein can be the first blockchain integrated station. Because the certificate corresponding to the first blockchain integrated station is the root certificate, signature verification is performed for the root certificate by using the first identity public key included in the root certificate. Any blockchain integrated station herein can be another second blockchain integrated station, and the certificate corresponding to the another second blockchain integrated station is the leaf certificate. Therefore, the leaf certificate can be verified by the root certificate, which will not be described redundantly. After completing the verification, the second blockchain integrated station can record the information of the blockchain integrated station determined as a blockchain node to the node information list maintained by itself. Similarly, the first blockchain integrated station and another second blockchain integrated station all can maintain a node information list respectively to record the information of the blockchain nodes identified by itself (information of the blockchain integrated station corresponding to the blockchain node). The information recorded in the node information list can include at least one of IP address of the blockchain integrated station, identity public key of the blockchain integrated station or the like.

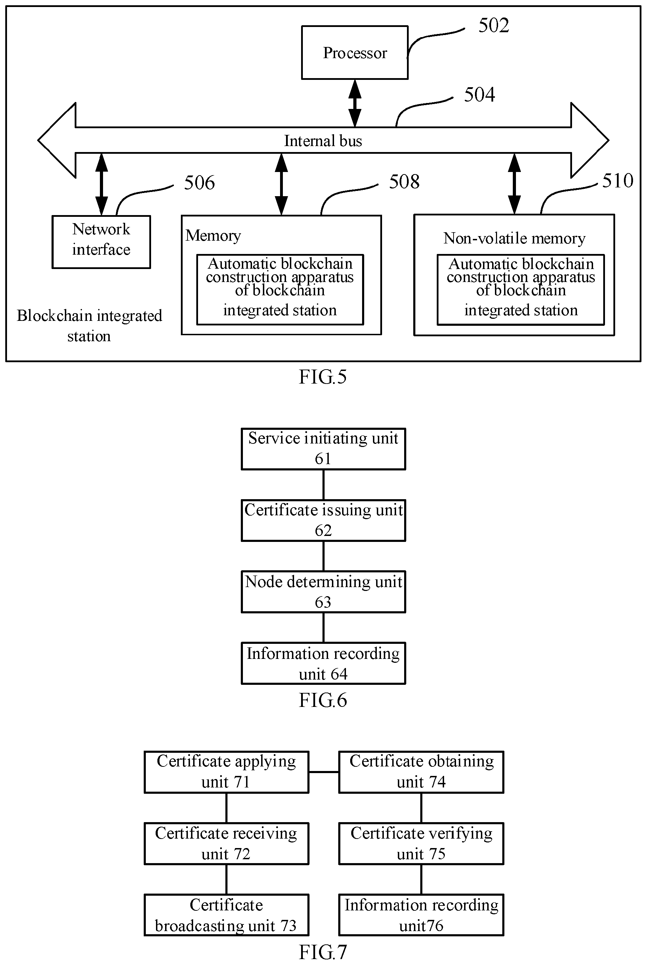

FIG. 5 is a structural schematic diagram of a blockchain integrated station according to example embodiments of the present disclosure. As shown in FIG. 5, at the hardware level, the device includes a processor 502, an internal bus 504, a network interface 506, a memory 508, and a non-volatile memory 510. Of course, the device may further include hardware needed for other services. The processor 502 reads corresponding computer programs from the non-volatile memory 510 to the memory 508 for running, so as to logically form an automatic blockchain construction apparatus of a blockchain integrated station. Of course, in addition to the software implementation, one or more embodiments of the present disclosure do not preclude other implementations, for example, logic device or a combination of software and hardware or the like. That is, the executing subject of the following processing flow is not limited to each logic unit and may also be hardware or logic device.

As shown in FIG. 6, in a software implementation, the automatic blockchain construction apparatus of a blockchain integrated station may include:
a service initiating unit 61, configured to enable a first blockchain integrated station to initiate a certificate authority service to generate a root certificate and broadcast the root certificate in a network where the first blockchain located;
a certificate issuing unit 62, configured to enable the first blockchain integrated station to receive an authentication application initiated by a second blockchain integrated station in the network, and issue a leaf certificate to the second blockchain integrated station based on the certificate authority service after the authentication application passes verification;
a node determining unit 63, configured to enable the first blockchain integrated station to determine a blockchain node in a blockchain network, where the blockchain node includes the first blockchain integrated station and the second blockchain integrated station in the network with the leaf certificate issued by the certificate authority service.

Optionally, the service initiating unit 61 is configured to enable the first blockchain integrated station to initiate the certificate authority service includes:
enabling the first blockchain integrated station to initiate the certificate authority service in a case of accessing the network and being elected as a primary node.

Optionally, the service initiating unit 61is configured to enable the first blockchain integrated station to generate the root certificate includes:
enabling the first blockchain integrated station to create a first identity key, where the first identity key includes a first identity private key and a first identity public key;
enabling the first blockchain integrated station to provide the first identity private key to the certificate authority service, so that the certificate authority service signs the first identity public key and description information of the first blockchain integrated station by using the first identity private key to generate the root certificate.

Optionally, the authentication application includes a second identity public key and description information of the second blockchain integrated station; the certificate issuing unit 62 is configured to enable the first blockchain integrated station to issue a leaf certificate to the second blockchain integrated station based on the certificate authority service includes:
enabling the first blockchain integrated station to provide the first identity private key to the certificate authority service and further enabling the certificate authority service to sign the second identity public key, the description information of the second blockchain integrated station and the description information of the first blockchain integrated station by using the first identity private key to generate the leaf certificate.

Optionally, the node determining unit 63 is configured enable the first blockchain integrated station to determine the second blockchain integrated station in the network with the leaf certificate issued by the certificate authority service includes:
enabling the first blockchain integrated station to receive a to-be-verified leaf certificate from the second blockchain integrated station;
enabling the first blockchain integrated station to verify the to-be-verified leaf certificate based on the root certificate and determine the to-be-verified leaf certificate is issued by the certificate authority service in a case of successful verification.

Optionally, the apparatus further includes:
an information recording unit 64, configured to enable the first blockchain integrated station to record information of a blockchain integrated station determined as a blockchain node into a node information list.

Optionally, the information of blockchain integrated station recorded in the node information list includes at least one of IP address of the blockchain integrated station or identity public key of the blockchain integrated station.

As shown in FIG. 7, in another software implementation, the automatic blockchain construction apparatus of a blockchain integrated station may include:
a certificate applying unit 71, configured to enable a second blockchain integrated station to initiate an authentication application to a first blockchain integrated station in a network after accessing the network;
a certificate receiving unit 72, configured to enable the second blockchain integrated station to receive a leaf certificate issued by the first blockchain integrated station based on a certificate authority service, where the leaf certificate is generated by the first blockchain integrated station after determining that the authentication application passes verification;
a certificate broadcasting unit 73, configured to enable the second blockchain integrated station to broadcast the leaf certificate in the network to join in a blockchain network created by the first blockchain integrated station.

Optionally, the certificate applying unit 71 is configured to enable the second blockchain integrated station to initiate the authentication application to the first blockchain integrated station in the network includes:
enabling the second blockchain integrated station to initiate the authentication application to the first blockchain integrated station in a case of determining that the first blockchain integrated station is elected as a primary node.

Optionally, the apparatus further includes:
**a** certificate obtaining unit 74, configured to enable the second blockchain integrated station to obtain a root certificate of the first blockchain integrated station, where the root certificate is generated by the certificate authority service;
a certificate verifying unit 75, configured to enable the second blockchain integrated station to verify a certificate of any blockchain integrated station based on the root certificate, and determine any blockchain integrated station as a blockchain node in the blockchain network after verification is passed.

Optionally, the apparatus further includes:
an information recording unit 76, configured to enable the second blockchain integrated station to record information of a blockchain integrated station determined as a blockchain node into a node information list.

Optionally, the information of blockchain integrated station recorded in the node information list includes at least one of IP address of the blockchain integrated station or identity public key of the blockchain integrated station.

The systems, apparatuses, modules or units described in the above embodiments can be specifically implemented by a computer chip or an entity or can be implemented by a product with a particular function. A typical implementing device can be a computer and the computer can specifically be a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

In a typical configuration, the computer may include one or more central processing units (CPU), an input/output interface, a network interface and a memory.

The memory can include a non-permanent memory, a random access memory (RAM), and/or a non-volatile memory and the like in a computer readable medium, for example, read only memory (ROM), or flash RAM. The memory is one example of the computer readable medium.

The computer readable medium includes permanent, non-permanent, mobile and non-mobile media, which can realize information storage by any method or technology. The information can be computer readable instructions, data structures, program modules and other data. The examples of the computer storage medium include but not limited to: a phase change random access memory (PRAM), a Static Random Access Memory (SRAM), a Dynamic Random Access Memory (DRAM), and other types of RAMs, Read-Only Memory (ROM), an Electrically-Erasable Programmable Read-Only Memory (EEPROM), a Flash Memory, or other memory technology, CD-ROM, digital versatile disc (DVD) or other optical storage, cassette type magnetic tape, magnetic disk storage, quantum memory, storage medium based on graphene, or other magnetic storage device or other non-transmission medium for storing information accessible by computing devices. According to the definition of the specification, the computer readable medium does not include transitory computer readable media, for example, modulated data signal and carriers.

It should be noted that the term "including", "containing" or any variation thereof is intended to encompass non-exclusive inclusion, so that a process, method, product or device including a series of elements includes not only those elements but also other elements not listed explicitly or those elements inherent to such a process, method, product or device. Without more limitations, an element defined by the statement "including a..." shall not be precluded to include additional same elements present in a process, method, product or device including the elements.

The specific embodiments are described as above. Other embodiments are within the scope of the appended claims. In some cases, the actions or steps recorded in the claims can be performed in a sequence different from the embodiments to achieve the desired result. Further, the processes shown in drawings do not necessarily require a particular sequence or a continuous sequence shown to achieve the desired result. In some implementations, a multi-task processing and parallel processing is possible and may also be advantageous.

The terms used in one or more embodiments of the present disclosure are for the purpose of describing particular embodiments only, and are not intended to limit the one or more embodiments of the present disclosure. Terms "a", "the" and "said" used in their singular forms in one or more embodiments of the present disclosure and the appended claims are also intended to include plurality, unless clearly indicated otherwise in the context. It should also be understood that the term "and/or" as used herein refers to and includes any and all possible combinations of one or more of the associated listed items.

It should be understood that, although the terms "first," "second," "third," and the like may be used in one or more embodiments of the present disclosure to describe various information, such information should not be limited to these terms. These terms are only used to distinguish one category of information from another. For example, without departing from the scope of one or more embodiments of the present disclosure, first information may be referred as second information; and similarly, the second information may also be referred as the first information. Depending on the context, the term "if' as used herein can be interpreted as "when" or "upon" or "in response to determining".

The above-mentioned disclosure is merely illustrative of preferred embodiments of one or more embodiments of the present disclosure but not intended to limit the present disclosure, and any modifications, equivalent substitutions, adaptations thereof made within the principles of the disclosure shall be encompassed in the scope of protection of the present disclosure.

## Claims

1. An automatic blockchain construction method of a blockchain integrated station, comprising:
initiating (102), by a first blockchain integrated station, a certificate authority service to generate a root certificate;
generating, by the first blockchain integrated station, the root certificate;
broadcasting the root certificate in a network where the first blockchain integrated station is located, wherein the initiating (102) is based on an election rule dedicating a node device with a largest IP address as a primary node;
receiving (104), by the first blockchain integrated station, an authentication application initiated by a second blockchain integrated station in the network, and issuing a leaf certificate to the second blockchain integrated station based on the certificate authority service after the authentication application passes verification;
determining (106), by the first blockchain integrated station, a blockchain node in a blockchain network, wherein the blockchain node is the first blockchain integrated station or the second blockchain integrated station in the network with the leaf certificate issued by the certificate authority service; and
recording, by the first blockchain integrated station, information of the first blockchain integrated station and the second blockchain integrated station that are determined as the blockchain node into a node information list,
wherein the information of the first blockchain integrated station and the second blockchain integrated station recorded in the node information list comprises an IP address of the second blockchain integrated station.

2. The method according to claim 1, wherein the generating, by the first blockchain integrated station, the root certificate comprises:
creating, by the first blockchain integrated station, a first identity key, wherein the first identity key comprises a first identity private key and a corresponding first identity public key; and
providing, by the first blockchain integrated station, the first identity private key to the certificate authority service, such that the certificate authority service signs the first identity public key and description information of the first blockchain integrated station by using the first identity private key to generate the root certificate.

3. The method according to claim 2, wherein the authentication application comprises a second identity public key of the second blockchain integrated station and description information of the second blockchain integrated station; and the issuing, by the first blockchain integrated station, the leaf certificate to the second blockchain integrated station based on the certificate authority service, comprises:
providing, by the first blockchain integrated station, the first identity private key to the certificate authority service, such that the certificate authority service signs the second identity public key and the description information of the second blockchain integrated station and the description information of the first blockchain integrated station by using the first identity private key to generate the leaf certificate.

4. The method according to claim 1, wherein the determining, by the first blockchain integrated station, the second blockchain integrated station in the network with the leaf certificate issued by the certificate authority service comprises:
receiving, by the first blockchain integrated station, a to-be-verified leaf certificate from the second blockchain integrated station; and
verifying, by the first blockchain integrated station, the to-be-verified leaf certificate based on the root certificate and determining that the to-be-verified leaf certificate is issued by the certificate authority service in a case of successful verification.

5. An automatic blockchain construction method of a blockchain integrated station, comprising:
after accessing a network, initiating (402), by a second blockchain integrated station, an authentication application to a first blockchain integrated station in the network in a case of determining that the first blockchain integrated station is elected as a primary node, wherein the determining that the first blockchain integrated station is elected as the primary node is based on an election rule dedicating a node device with a largest IP address as a primary node;
receiving (404), by the second blockchain integrated station, a leaf certificate issued by the first blockchain integrated station based on a certificate authority service, wherein the leaf certificate is generated by the first blockchain integrated station after determining that the authentication application passes verification;
broadcasting (406), by the second blockchain integrated station, the leaf certificate in the network to join in a blockchain network created by the first blockchain integrated station; and
recording, by the second blockchain integrated station, information of a blockchain integrated station determined as a blockchain node into a node information list,
wherein the information of the blockchain integrated station in the node information list comprises an IP address of the blockchain integrated station.

6. The method according to claim 5, further comprising:
obtaining, by the second blockchain integrated station, a root certificate of the first blockchain integrated station, wherein the root certificate is generated by the certificate authority service; and
verifying, by the second blockchain integrated station, a certificate of any blockchain integrated station based on the root certificate, and determining the any blockchain integrated station as a blockchain node in the blockchain network after successful verification.

7. An automatic blockchain construction apparatus of a blockchain integrated station, comprising:
a service initiating unit (61), configured to enable a first blockchain integrated station to initiate a certificate authority service to generate a root certificate and broadcast the root certificate in a network where the first blockchain integrated station is located, wherein the initiating is based on an election rule dedicating a node device with a largest IP address as a primary node;
a certificate issuing unit (62), configured to enable the first blockchain integrated station to receive an authentication application initiated by a second blockchain integrated station in the network, and issue a leaf certificate to the second blockchain integrated station based on the certificate authority service after the authentication application passes verification;
a node determining unit (63), configured to enable the first blockchain integrated station to determine a blockchain node in a blockchain network, wherein the blockchain node is the first blockchain integrated station or the second blockchain integrated station in the network with the leaf certificate issued by the certificate authority service; and
an information recording unit (64), configured to enable the first blockchain integrated station to record information of the first blockchain integrated station and the second blockchain integrated station that are determined as the blockchain node into a node information list,
wherein the information of the first blockchain integrated station and the second blockchain integrated station recorded in the node information list comprises an IP address of the second blockchain integrated station.

8. An automatic blockchain construction apparatus of a blockchain integrated station, comprising:
a certificate applying unit (71), configured to enable a second blockchain integrated station to initiate an authentication application to a first blockchain integrated station in a network after accessing the network in a case of determining that the first blockchain integrated station is elected as a primary node, wherein the determining that the first blockchain integrated station is elected as the primary node is based on an election rule dedicating a node device with a largest IP address as a primary node;
a certificate receiving unit (72), configured to enable the second blockchain integrated station to receive a leaf certificate issued by the first blockchain integrated station based on a certificate authority service, wherein the leaf certificate is generated by the first blockchain integrated station after determining that the authentication application passes verification;
a certificate broadcasting unit (73), configured to enable the second blockchain integrated station to broadcast the leaf certificate in the network to join in a blockchain network created by the first blockchain integrated station; and
an information recording unit (76), configured to enable the second blockchain integrated station to record information of a blockchain integrated station determined as a blockchain node into a node information list,
wherein the information of the blockchain integrated station in the node information list comprises an IP address of the blockchain integrated station.

9. A blockchain integrated station, comprising
a processor,
a memory for storing instructions executable by the processor;
wherein the processor performs the methods according to any one of claims 1-6 by executing the executable instructions.

10. A computer readable storage medium having computer instructions stored thereon, wherein the computer instructions are executed by a processor to implement steps of the method according to any one of claims 1-6.

## Patentansprüche

1. Automatisches Blockchain-Konstruktionsverfahren einer integrierten Blockchain-Station, umfassend:
Initiieren (102), durch eine erste integrierte Blockchain-Station, eines Zertifikatautoritätsdiensts, um ein Wurzel-Zertifikat zu erzeugen;
Erzeugen, durch die erste integrierte Blockchain-Station, des Wurzel-Zertifikats;
Rundsenden des Wurzel-Zertifikats in einem Netzwerk, wo sich die erste integrierte Blockchain-Station befindet, wobei das Initiieren (102) auf einer Wahlregel basiert, die eine Knotenvorrichtung mit einer größten IP-Adresse als einen Primärknoten dediziert;
Empfangen (104), durch die erste integrierte Blockchain-Station, einer Authentifizierungsanwendung, die durch eine zweite integrierte Blockchain-Station in dem Netzwerk initiiert wird, und Ausgeben eines Blatt-Zertifikats an die zweite integrierte Blockchain-Station basierend auf dem Zertifikatautoritätsdienst, nachdem die Authentifizierungsanwendung eine Verifizierung bestanden hat;
Bestimmen (106), durch die erste integrierte Blockchain-Station, eines Blockchain-Knotens in einem Blockchain-Netzwerk, wobei der Blockchain-Knoten die erste integrierte Blockchain-Station oder die zweite integrierte Blockchain-Station in dem Netzwerk mit dem Blatt-Zertifikat ist, das durch den Zertifikatautoritätsdienst ausgegeben wird; und
Aufzeichnen, durch die erste integrierte Blockchain-Station, von Informationen der ersten integrierten Blockchain-Station und der zweiten integrierten Blockchain-Station, die als der Blockchain-Knoten bestimmt werden, in einer Knoteninformationsliste,
wobei die Informationen der ersten integrierten Blockchain-Station und der zweiten integrierten Blockchain-Station, die in der Knoteninformationsliste aufgezeichnet sind, eine IP-Adresse der zweiten integrierten Blockchain-Station umfassen.

2. Verfahren nach Anspruch 1, wobei das Erzeugen, durch die erste integrierte Blockchain-Station, des Wurzel-Zertifikats umfasst:
Erzeugen, durch die erste integrierte Blockchain-Station, eines ersten Identitätsschlüssels, wobei der erste Identitätsschlüssel einen ersten privaten Identitätsschlüssel und einen entsprechenden ersten öffentlichen Identitätsschlüssel umfasst; und
Bereitstellen, durch die erste integrierte Blockchain-Station, des ersten privaten Identitätsschlüssels für den Zertifikatautoritätsdienst, so dass der Zertifikatautoritätsdienst den ersten öffentlichen Identitätsschlüssel und Beschreibungsinformationen der ersten integrierten Blockchain-Station unter Verwendung des ersten privaten Identitätsschlüssels signiert, um das Wurzel-Zertifikat zu erzeugen.

3. Verfahren nach Anspruch 2, wobei die Authentifizierungsanwendung einen zweiten öffentlichen Identitätsschlüssel der zweiten integrierten Blockchain-Station und Beschreibungsinformationen der zweiten integrierten Blockchain-Station umfasst; und das Ausgeben, durch die erste integrierte Blockchain-Station, des Blatt-Zertifikats an die zweite integrierte Blockchain-Station basierend auf dem Zertifikatautoritätsdienst umfasst:
Bereitstellen, durch die erste integrierte Blockchain-Station, des ersten privaten Identitätsschlüssels für den Zertifikatautoritätsdienst, so dass der Zertifikatautoritätsdienst den zweiten öffentlichen Identitätsschlüssel und die Beschreibungsinformationen der zweiten integrierten Blockchain-Station und die Beschreibungsinformationen der ersten integrierten Blockchain-Station unter Verwendung des ersten privaten Identitätsschlüssels signiert, um das Blatt-Zertifikat zu erzeugen.

4. Verfahren nach Anspruch 1, wobei das Bestimmen, durch die erste integrierte Blockchain-Station, der zweiten integrierten Blockchain-Station in dem Netzwerk mit dem Blatt-Zertifikat, das durch den Zertifikatautoritätsdienst ausgegeben wird, umfasst:
Empfangen, durch die erste integrierte Blockchain-Station, eines zu verifizierenden Blatt-Zertifikats von der zweiten integrierten Blockchain-Station; und
Verifizieren, durch die erste integrierte Blockchain-Station, des zu verifizierenden Blatt-Zertifikats basierend auf dem Wurzel-Zertifikat und Bestimmen, dass das zu verifizierende Blatt-Zertifikat durch den Zertifikatautoritätsdienst in einem Fall einer erfolgreichen Verifizierung ausgegeben wird.

5. Automatisches Blockchain-Konstruktionsverfahren einer integrierten Blockchain-Station, umfassend:
nach dem Zugreifen auf ein Netzwerk, Initiieren (402), durch eine zweite integrierte Blockchain-Station, einer Authentifizierungsanwendung an eine erste integrierte Blockchain-Station in dem Netzwerk in einem Fall von Bestimmen, dass die erste integrierte Blockchain-Station als ein Primärknoten gewählt ist, wobei das Bestimmen, dass die erste integrierte Blockchain-Station als der Primärknoten gewählt ist, auf einer Wahlregel basiert, die eine Knotenvorrichtung mit einer größten IP-Adresse als einen Primärknoten dediziert;
Empfangen (404), durch die zweite integrierte Blockchain-Station, eines Blatt-Zertifikats, das durch die erste integrierte Blockchain-Station basierend auf einem Zertifikatautoritätsdienst ausgegeben wird, wobei das Blatt-Zertifikat durch die erste integrierte Blockchain-Station erzeugt wird, nachdem bestimmt wurde, dass die Authentifizierungsanwendung eine Verifizierung bestanden hat;
Rundsenden (406), durch die zweite integrierte Blockchain-Station, des Blatt-Zertifikats in dem Netzwerk, um einem Blockchain-Netzwerk beizutreten, das durch die erste integrierte Blockchain-Station erzeugt wurde; und
Aufzeichnen, durch die zweite integrierte Blockchain-Station, von Informationen einer integrierten Blockchain-Station, die als ein Blockchain-Knoten bestimmt wurde, in einer Knoteninformationsliste,
wobei die Informationen der integrierten Blockchain-Station in der Knoteninformationsliste eine IP-Adresse der integrierten Blockchain-Station umfassen.

6. Verfahren nach Anspruch 5, ferner umfassend:
Erhalten, durch die zweite integrierte Blockchain-Station, eines Wurzel-Zertifikats der ersten integrierten Blockchain-Station, wobei das Wurzel-Zertifikat durch den Zertifikatautoritätsdienst erzeugt wird; und
Verifizieren, durch die zweite integrierte Blockchain-Station, eines Zertifikats einer beliebigen integrierten Blockchain-Station basierend auf dem Wurzel-Zertifikat und Bestimmen der beliebigen integrierten Blockchain-Station als einen Blockchain-Knoten in dem Blockchain-Netzwerk nach einer erfolgreichen Verifizierung.

7. Automatische Blockchain-Konstruktionsvorrichtung einer integrierten Blockchain-Station, umfassend:
eine Dienstinitiierungseinheit (61), die eingerichtet ist, einer ersten integrierten Blockchain-Station zu ermöglichen, einen Zertifikatautoritätsdienst zu initiieren, um ein Wurzel-Zertifikat zu erzeugen und das Wurzel-Zertifikat in einem Netzwerk rundzusenden, wo sich die erste integrierte Blockchain-Station befindet, wobei das Initiieren auf einer Wahlregel basiert, die eine Knotenvorrichtung mit einer größten IP-Adresse als einen Primärknoten dediziert;
eine Zertifikatsausgabeeinheit (62), die eingerichtet ist, der ersten integrierten Blockchain-Station zu ermöglichen, eine Authentifizierungsanwendung zu empfangen, die durch eine zweite integrierte Blockchain-Station in dem Netzwerk initiiert wird, und ein Blatt-Zertifikat an die zweite integrierte Blockchain-Station basierend auf dem Zertifikatautoritätsdienst auszugeben, nachdem die Authentifizierungsanwendung eine Verifizierung bestanden hat;
eine Knotenbestimmungseinheit (63), die eingerichtet ist, der ersten integrierten Blockchain-Station zu ermöglichen, einen Blockchain-Knoten in einem Blockchain-Netzwerk zu bestimmen, wobei der Blockchain-Knoten die erste integrierte Blockchain-Station oder die zweite integrierte Blockchain-Station in dem Netzwerk mit dem Blatt-Zertifikat ist, das durch den Zertifikatautoritätsdienst ausgegeben wird; und
eine Informationsaufzeichnungseinheit (64), die eingerichtet ist, der ersten integrierten Blockchain-Station zu ermöglichen, Informationen der ersten integrierten Blockchain-Station und der zweiten integrierten Blockchain-Station, die als der Blockchain-Knoten bestimmt werden, in einer Knoteninformationsliste aufzuzeichnen,
wobei die Informationen der ersten integrierten Blockchain-Station und der zweiten integrierten Blockchain-Station, die in der Knoteninformationsliste aufgezeichnet sind, eine IP-Adresse der zweiten integrierten Blockchain-Station umfassen.

8. Automatische Blockchain-Konstruktionsvorrichtung einer integrierten Blockchain-Station, umfassend:
eine Zertifikatanwendungseinheit (71), die eingerichtet ist, einer zweiten integrierten Blockchain-Station zu ermöglichen, eine Authentifizierungsanwendung an eine erste integrierte Blockchain-Station in einem Netzwerk nach dem Zugreifen auf das Netzwerk in einem Fall von Bestimmen, dass die erste integrierte Blockchain-Station als ein Primärknoten gewählt ist, zu initiieren, wobei das Bestimmen, dass die erste integrierte Blockchain-Station als der Primärknoten gewählt ist, auf einer Wahlregel basiert, die eine Knotenvorrichtung mit einer größten IP-Adresse als einen Primärknoten dediziert;
eine Zertifikatsempfangseinheit (72), die eingerichtet ist, der zweiten integrierten Blockchain-Station zu ermöglichen, ein Blatt-Zertifikat zu empfangen, das durch die erste integrierte Blockchain-Station basierend auf einem Zertifikatautoritätsdienst ausgegeben wird, wobei das Blatt-Zertifikat durch die erste integrierte Blockchain-Station erzeugt wird, nachdem bestimmt wurde, dass die Authentifizierungsanwendung eine Verifizierung bestanden hat;
eine Zertifikatsrundsendeeinheit (73), die eingerichtet ist, der zweiten integrierten Blockchain-Station zu ermöglichen, das Blatt-Zertifikat in dem Netzwerk rundzusenden, um einem Blockchain-Netzwerk beizutreten, das durch die erste integrierte Blockchain-Station erzeugt wurde; und
eine Informationsaufzeichnungseinheit (76), die eingerichtet ist, der zweiten integrierten Blockchain-Station zu ermöglichen, Informationen einer integrierten Blockchain-Station, die als ein Blockchain-Knoten bestimmt wurde, in einer Knoteninformationsliste aufzuzeichnen,
wobei die Informationen der integrierten Blockchain-Station in der Knoteninformationsliste eine IP-Adresse der integrierten Blockchain-Station umfassen.

9. Integrierte Blockchain-Station, umfassend
einen Prozessor,
einen Speicher zum Speichern von durch den Prozessor ausführbaren Befehlen;
wobei der Prozessor die Verfahren nach einem der Ansprüche 1-6 durch Ausführen der ausführbaren Befehle durchführt.

10. Computerlesbares Speichermedium mit darauf gespeicherten Computerbefehlen, wobei die Computerbefehle durch einen Prozessor ausgeführt werden, um Schritte des Verfahrens nach einem der Ansprüche 1-6 zu implementieren.

## Revendications

1. Procédé de construction automatique de chaîne de blocs d'une station intégrée de chaîne de blocs, comprenant :
le lancement (102), par une première station intégrée de chaîne de blocs, d'un service d'autorité de certification pour générer un certificat racine ;
la génération, par la première station intégrée de chaîne de blocs, du certificat racine ;
la diffusion du certificat racine dans un réseau où la première station intégrée de chaîne de blocs est située, dans lequel le lancement (102) est basé sur une règle d'élection consacrant un dispositif de noeud avec une adresse IP la plus grande comme noeud primaire ;
la réception (104), par la première station intégrée de chaîne de blocs, d'une demande d'authentification lancée par une seconde station intégrée de chaîne de blocs dans le réseau, et l'émission d'un certificat feuille à la seconde station intégrée de chaîne de blocs sur la base du service d'autorité de certification après que la demande d'authentification a réussi la vérification ;
la détermination (106), par la première station intégrée de chaîne de blocs, d'un noeud de chaîne de blocs dans un réseau de chaîne de blocs, dans lequel le noeud de chaîne de blocs est la première station intégrée de chaîne de blocs ou la seconde station intégrée de chaîne de blocs dans le réseau avec le certificat feuille émis par le service d'autorité de certification ; et
l'enregistrement, par la première station intégrée de chaîne de blocs, d'informations de la première station intégrée de chaîne de blocs et de la seconde station intégrée de chaîne de blocs qui sont déterminées comme le noeud de chaîne de blocs dans une liste d'informations de noeud,
dans lequel les informations de la première station intégrée de chaîne de blocs et de la seconde station intégrée de chaîne de blocs enregistrées dans la liste d'informations de noeud comprennent une adresse IP de la seconde station intégrée de chaîne de blocs.

2. Procédé selon la revendication 1, dans lequel la génération, par la première station intégrée de chaîne de blocs, du certificat racine comprend :
la création, par la première station intégrée de chaîne de blocs, d'une première clé d'identité, dans lequel la première clé d'identité comprend une première clé privée d'identité et une première clé publique d'identité correspondante ; et
la fourniture, par la première station intégrée de chaîne de blocs, de la première clé privée d'identité au service d'autorité de certification, de sorte que le service d'autorité de certification signe la première clé publique d'identité et des informations de description de la première station intégrée de chaîne de blocs en utilisant la première clé privée d'identité pour générer le certificat racine.

3. Procédé selon la revendication 2, dans lequel la demande d'authentification comprend une seconde clé publique d'identité de la seconde station intégrée de chaîne de blocs et des informations de description de la seconde station intégrée de chaîne de blocs ; et l'émission, par la première station intégrée de chaîne de blocs, du certificat feuille à la seconde station intégrée de chaîne de blocs sur la base du service d'autorité de certification, comprend :
la fourniture, par la première station intégrée de chaîne de blocs, de la première clé privée d'identité au service d'autorité de certification, de sorte que le service d'autorité de certification signe la seconde clé publique d'identité et les informations de description de la seconde station intégrée de chaîne de blocs et les informations de description de la première station intégrée de chaîne de blocs en utilisant la première clé privée d'identité pour générer le certificat feuille.

4. Procédé selon la revendication 1, dans lequel la détermination, par la première station intégrée de chaîne de blocs, de la seconde station intégrée de chaîne de blocs dans le réseau avec le certificat feuille émis par le service d'autorité de certification comprend :
la réception, par la première station intégrée de chaîne de blocs, d'un certificat feuille à vérifier provenant de la seconde station intégrée de chaîne de blocs ; et
la vérification, par la première station intégrée de chaîne de blocs, du certificat feuille à vérifier sur la base du certificat racine et la détermination que le certificat feuille à vérifier est émis par le service d'autorité de certification en cas de vérification réussie.

5. Procédé de construction automatique de chaîne de blocs d'une station intégrée de chaîne de blocs, comprenant :
après l'accès à un réseau, le lancement (402), par une seconde station intégrée de chaîne de blocs, d'une demande d'authentification à une première station intégrée de chaîne de blocs dans le réseau en cas de détermination que la première station intégrée de chaîne de blocs est élue comme noeud primaire, dans lequel la détermination que la première station intégrée de chaîne de blocs est élue comme noeud primaire est basée sur une règle d'élection consacrant un dispositif de noeud avec une adresse IP la plus grande comme noeud primaire ;
la réception (404), par la seconde station intégrée de chaîne de blocs, d'un certificat feuille émis par la première station intégrée de chaîne de blocs sur la base d'un service d'autorité de certification, dans lequel le certificat feuille est généré par la première station intégrée de chaîne de blocs après la détermination que la demande d'authentification a réussi la vérification ;
la diffusion (406), par la seconde station intégrée de chaîne de blocs, du certificat feuille dans le réseau pour rejoindre un réseau de chaîne de blocs créé par la première station intégrée de chaîne de blocs ; et
l'enregistrement, par la seconde station intégrée de chaîne de blocs, d'informations d'une station intégrée de chaîne de blocs déterminée comme un noeud de chaîne de blocs dans une liste d'informations de noeud,
dans lequel les informations de la station intégrée de chaîne de blocs dans la liste d'informations de noeud comprennent une adresse IP de la station intégrée de chaîne de blocs.

6. Procédé selon la revendication 5, comprenant en outre :
l'obtention, par la seconde station intégrée de chaîne de blocs, d'un certificat racine de la première station intégrée de chaîne de blocs, dans lequel le certificat racine est généré par le service d'autorité de certification ; et
la vérification, par la seconde station intégrée de chaîne de blocs, d'un certificat d'une quelconque station intégrée de chaîne de blocs sur la base du certificat racine, et la détermination de la quelconque station intégrée de chaîne de blocs comme un noeud de chaîne de blocs dans le réseau de chaîne de blocs après vérification réussie.

7. Appareil de construction automatique de chaîne de blocs d'une station intégrée de chaîne de blocs, comprenant :
une unité de lancement de service (61), configurée pour permettre à une première station intégrée de chaîne de blocs de lancer un service d'autorité de certification pour générer un certificat racine et diffuser le certificat racine dans un réseau où la première station intégrée de chaîne de blocs est située, dans lequel le lancement est basé sur une règle d'élection consacrant un dispositif de noeud avec une adresse IP la plus grande comme noeud primaire ;
une unité d'émission de certificat (62), configurée pour permettre à la première station intégrée de chaîne de blocs de recevoir une demande d'authentification lancée par une seconde station intégrée de chaîne de blocs dans le réseau, et d'émettre un certificat feuille à la seconde station intégrée de chaîne de blocs sur la base du service d'autorité de certification après que la demande d'authentification a réussi la vérification ;
une unité de détermination de noeud (63), configurée pour permettre à la première station intégrée de chaîne de blocs de déterminer un noeud de chaîne de blocs dans un réseau de chaîne de blocs, dans lequel le noeud de chaîne de blocs est la première station intégrée de chaîne de blocs ou la seconde station intégrée de chaîne de blocs dans le réseau avec le certificat feuille émis par le service d'autorité de certification ; et
une unité d'enregistrement d'informations (64), configurée pour permettre à la première station intégrée de chaîne de blocs d'enregistrer des informations de la première station intégrée de chaîne de blocs et de la seconde station intégrée de chaîne de blocs qui sont déterminées comme le noeud de chaîne de blocs dans une liste d'informations de noeud,
dans lequel les informations de la première station intégrée de chaîne de blocs et de la seconde station intégrée de chaîne de blocs enregistrées dans la liste d'informations de noeud comprennent une adresse IP de la seconde station intégrée de chaîne de blocs.

8. Appareil de construction automatique de chaîne de blocs d'une station intégrée de chaîne de blocs, comprenant :
une unité de demande de certificat (71), configurée pour permettre à une seconde station intégrée de chaîne de blocs de lancer une demande d'authentification à une première station intégrée de chaîne de blocs dans un réseau après l'accès au réseau en cas de détermination que la première station intégrée de chaîne de blocs est élue comme noeud primaire, dans lequel la détermination que la première station intégrée de chaîne de blocs est élue comme noeud primaire est basée sur une règle d'élection consacrant un dispositif de noeud avec une adresse IP la plus grande comme noeud primaire ;
une unité de réception de certificat (72), configurée pour permettre à la seconde station intégrée de chaîne de blocs de recevoir un certificat feuille émis par la première station intégrée de chaîne de blocs sur la base d'un service d'autorité de certification, dans lequel le certificat feuille est généré par la première station intégrée de chaîne de blocs après la détermination que la demande d'authentification a réussi la vérification ;
une unité de diffusion de certificat (73), configurée pour permettre à la seconde station intégrée de chaîne de blocs de diffuser le certificat feuille dans le réseau pour rejoindre un réseau de chaîne de blocs créé par la première station intégrée de chaîne de blocs ; et
une unité d'enregistrement d'informations (76), configurée pour permettre à la seconde station intégrée de chaîne de blocs d'enregistrer des informations d'une station intégrée de chaîne de blocs déterminée comme un noeud de chaîne de blocs dans une liste d'informations de noeud,
dans lequel les informations de la station intégrée de chaîne de blocs dans la liste d'informations de noeud comprennent une adresse IP de la station intégrée de chaîne de blocs.

9. Station intégrée de chaîne de blocs, comprenant
un processeur,
une mémoire pour stocker des instructions exécutables par le processeur ;
dans lequel le processeur exécute les procédés selon l'une quelconque des revendications 1 à 6 en exécutant les instructions exécutables.

10. Support de stockage lisible par ordinateur sur lequel sont stockées des instructions informatiques, dans lequel les instructions informatiques sont exécutées par un processeur pour mettre en oeuvre les étapes du procédé selon l'une quelconque des revendications 1 à 6.
